# EUROPÄISCHE PATENTSCHRIFT

(11) **EP 0 607 807 B1**
(45) Veröffentlichungstag und Bekanntmachung des Hinweises auf die Patenterteilung: **11.06.1997**
(21) Anmeldenummer: 94100131.5
(22) Anmeldetag: 05.01.1994
(51) Int. Cl.: B60M 1/18

(54) **Streckentrenner**
Section insulator
Isolateur de section

(30) Priorität: 18.01.1993 DE 9300560 U
(43) Veröffentlichungstag der Anmeldung: 27.07.1994
(73) Patentinhaber: SIEMENS AKTIENGESELLSCHAFT, 80333 München (DE)
(72) Erfinder: Menhorn, Hermann, D-23879 Mölln (DE)

(56) Entgegenhaltungen:
- DE-A- 2 014 021
- DE-A- 2 238 683

## Beschreibung

Die Erfindung betrifft einen Streckentrenner für Fahrleitungen elektrischer Fahrzeuge, insbesondere Bahnen.

Streckentrenner dieser Art sind z.B. aus der EP-B-0 052 176 bekannt. Bei diesen Streckentrennern für Fahrleitungen elektrischer Bahnen sind die Enden zweier Fahrdrähte an zwei Isolierstücken befestigt, zwischen denen Funkenhörner angeordnet sind. Die aus faserverstärktem Kunststoff bestehenden Isolierstücke sind als Isolierstoff-Gleitleisten ausgebildet, werden also, ebenso wie die Funkenhörner, vom Pantographen beschliffen. Die unter Spannung stehenden Fahrdrähte weisen einen stärkeren Abrieb auf als die nur dem mechanischen Abrieb ausgesetzten Isolierstoff-Gleitleisten. Die daraus resultierenden Unebenheiten im Bereich der Trennstelle führen zusammen mit dem Befahren durch riefenhaltige Schleifstücke an diesen Stellen zu starken Funkenbildungen und damit zu einer weiteren Vergrößerung des elektrischen Abriebs mit den bekannten Folgeerscheinungen. Eine zu starke Funkenbildung läßt sich bei dem bekannten Streckentrenner nur durch häufige Einstell- und Wartungsarbeiten verhindern.

Aufgabe der vorliegenden Erfindung ist es deshalb, einen Streckentrenner der eingangs genannten Art zu schaffen, der die beim Befahren auftretende Funkenbildung sowie die damit verbundenen Verschleißerscheinungen im Bereich der Trennstelle weitestgehend reduziert.

Diese Aufgabe wird erfindungsgemäß durch die Merkmale des Anspruchs 1 gelöst.

Bei dem erfindungsgemäßen Streckentrenner dienen die Isolierstücke ausschließlich der mechanischen Abspannung der Fahrdrähte. Die Isolierstücke werden also nicht vom Schleifstück des Pantographen beschliffen, so daß die Isolierstücke in vorteilhafter Weise keinem Verschleiß durch mechanischen Abrieb ausgesetzt sind.

Durch die erfindungsgemäße Anordnung wenigstens einer Leitkufe wird die Trennstelle zwischen den Funkenhörnern beim Befahren durch das Schleifstück des Pantographen elektrisch leitend überbrückt. Die Leitkufe ist hierzu mit einem der beiden Funkenhörner elektrisch leitend verbunden und zum anderen Funkenhorn vertikal beabstandet. Die Länge der Leitkufe ist hierbei so gewählt, daß die Trennstelle zwischen den Funkenhörnern beim Befahren hinreichend gut überbrückt wird. Nach dem Befahren der die Trennstelle überbrückenden Leitkufe bewegt sich diese wieder in ihre Ruhelage, in der die beiden Funkenhörner wieder voneinander isoliert sind. Durch die erfindungsgemäße Dämpfungseinrichtung bewegt sich die Leitkufe schnell und ohne nachzuschwingen aus ihrer Schließlage (Trennstelle elektrisch leitend überbrückt) nach unten in ihre Ruhelage (beide Fahrdrähte elektrisch voneinander getrennt), so daß bei Doppeltraktion der zweite Pantograph bereits wieder eine ruhende Leitkufe befährt.

Bei dem Streckentrenner gemäß Anspruch 1 fährt das Schleifstück des Pantographen immer auf Strompotential, da das Schleifstück des Pantographen immer elektrischen Kontakt zu wenigstens einer Leitkufe und/oder zur Anlaufkufe des jeweiligen Funkenhorns hat. Damit hat der Pantograph auch beim Befahren der Trennstelle Kontakt zur Fahrdrahtspannung.

Die Leitkufe des erfindungsgemäßen Streckentrenners überbrückt die Trennstelle auch mechanisch und gewährleistet durch ihre stufenlose Anpassung an die vertikale Auslenkung des Pantographen einen sicheren Kontakt zwischen Streckentrenner und Schleifstück des Pantographen. An der Leitkufe auftretende Schwingungen, die durch Resonanzen des Systems Fahrleitung-Pantograph und durch Unebenheiten im Schleifstück des Pantographen entstehen können, sowie ein daraus resultierendes unerwünschtes Springen des Pantographen werden durch die Dämpfungseinrichtung weitestgehend verhindert. Damit wird auch die dabei auftretende Funkenbildung nahezu vollständig vermieden, so daß bei einem Streckentrenner gemäß Anspruch 1 der elektrische Abrieb am Fahrdrahtspiegel, das ist die Fläche an welcher der Pantograph entlanggleitet, wesentlich verringert wird.

Die Erfindung wurde vorstehend an einem Streckentrenner mit einer Leitkufe erläutert. Es versteht sich in diesem Zusammenhang jedoch von selbst, daß der erfindungsgemäße Streckentrenner auch mehrere Leitkufen zur Überbrückung der Trennstelle aufweisen kann.

Weitere Vorteile und Einzelheiten der Erfindung ergeben sich aus der nachfolgenden Beschreibung eines Ausführungsspiels anhand der Zeichnung und in Verbindung mit den Unteransprüchen. Es zeigen:
- FIG 1: eine Seitenansicht eines erfindungsgemäßen Streckentrenners,
- FIG 2: eine Draufsicht auf den erfindungsgemäßen Streckentrenner gemäß FIG 1.

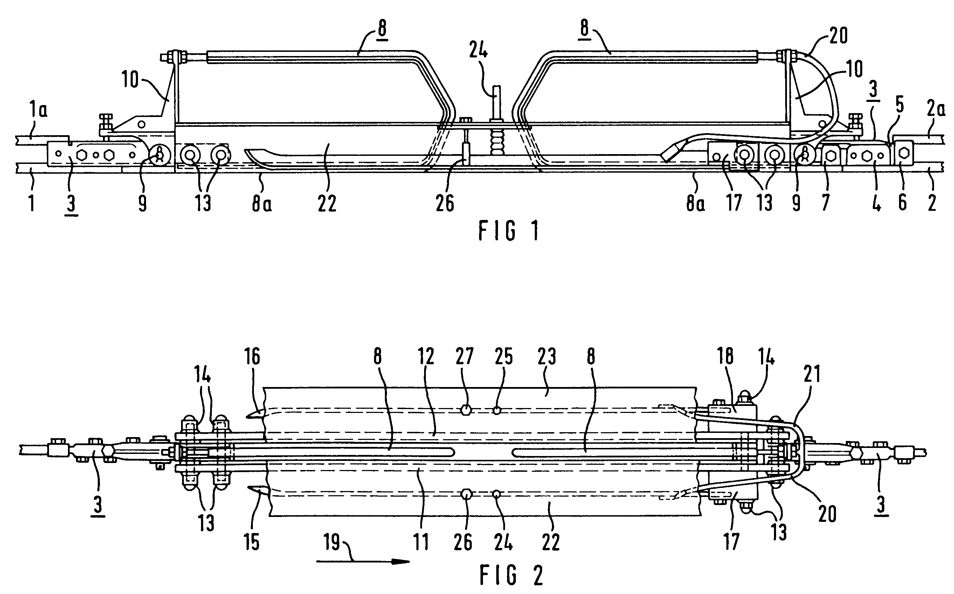

In FIG 1 und 2 sind mit 1 und 2 die Enden der Fahrdrähte zweier Fahrleitungsabschnitte bezeichnet, die durch einen Streckentrenner isolierend überbrückt sind. Der Streckentrenner besitzt auf jeder Seite eine Fahrdrahtendklemme 3 zum Abfangen der Enden 1,2 der Fahrdrähte, die mittels Klemmbacken 4 am Klemmkörper 5 der Fahrdrahtendklemme 3 angeklemmt werden. An dem Klemmkörper 5 der Fahrdrahtendklemme 3 ist ferner ein Klemmbacken 6 für ein kurzes Fahrdrahtstück 1a bzw.2a vorgesehen, das den befahrenden Fahrdraht beigeklemmt wird und einen weichen Übergang beim Befahren durch einen Stromabnehmer erzielen läßt. Weiter ist am Klemmkörper 5 der Fahrdrahtendklemme 3 ein Klemmbacken 7 zum Befestigen einer Auflaufkufe 8a eines Funkenhorns 8 angebracht.

Über einen Bolzen 9 ist an jedem Klemmkörper 5 ein Abfangstück 10 justierbar gelagert. An diesem Abfangstück 10 sind waagrechte Bohrungen für eine Befestigung zweier Isolierstücke 11,12 durch Gewindebolzen 13 mit Muttern 14 vorgesehen. Die Isolierstücke 11,12 sind als Isolierstoffleisten ausgebildet und parallel zueinander, seitlich der Funkenhörner 8 hochkant angeordnet (siehe auch FIG 2), so daß sie gemeinsam mit den Gewindebolzen 13 an den Abfangstücken 10 befestigt werden können. Die Isolierstücke 11,12 sind mit ihren Flachseiten senkrecht zu den Schleifstücken des Pantographen angeordnet. Die Isolierstücke 11,12 werden erfindungsgemäß von den Schleifstücken eines Pantographen nicht beschliffen. Bei dem erfindungsgemäßen Streckentrenner dienen die Isolierstücke 11,12 also ausschließlich der mechanischen Abspannung der Fahrdrähte und sind vorteilhafterweise keinem verschleiß durch mechanischen Abrieb ausgesetzt.

Gemäß der Erfindung ist nun zu beiden Seiten des Streckentrenners, parallel zu den Funkenhörnern 8 und den Isolierstücken 11 und 12, wie insbesondere aus FIG 2 ersichtlich, je eine metallische Leitkufe 15 bzw.16 angeordnet. Die Leitkufen 15 und 16 sind mit ihrem einen Ende an einem höhenverstellbaren Kufenabfangstück 17 bzw.18 vertikal drehbeweglich befestigt. Das andere Ende der Leitkufe 15 bzw.16 ist jeweils kufenartig nach oben gerichtet, so daß man in Hauptfahrtrichtung betrachtet (Pfeil 19) eine entsprechende Auflaufkufe erhält.

Die Form sowie der Einbau der Leitkufen 15 und 16 ist nicht auf das in FIG 1 und 2 dargestellte Ausführungsbeispiel beschränkt. Vielmehr sind auch andere Formen bzw. Einbaupositionen der Leitkufen 15 und 16 möglich. So kann z.B. das Kufenabfangstück 17 für die Leitkufe 15 an dem Fahrdrahtende 1 und das Kufenabfangstück 18 für die Leitkufe 16 an dem Fahrleitungsdrahtende 2 angeordnet sein. Auch die Anordnung von gegenüber den Kufenabfangsstücken 17 und 18 modifizierten Kufenabfangsstücken, die dann z.B. an den Isolierstücken 11 bzw.12 im Bereich der Trennstelle angeordnet sind, ist denkbar.

Die Leitkufen 15 und 16 überbrücken elektrisch leitend die Trennstelle zwischen den Funkenhörnern 8. Die Leitkufen 15,16 sind jeweils über einen Potentialverbinder 20,21 mit einem der beiden Funkenhörner 8, im vorliegenden Fall mit dem rechten Funkenhorn, elektrisch leitend verbunden. Die Länge der Leitkufen 15 und 16 ist so gewählt, daß die Trennstelle beim Befahren durch den Pantographen hinreichend gut überbrückt wird.

In vorteilhafter Weise ist zu beiden Seiten des Funkenhornpaares (bestehend aus den beiden Funkenhörnern 8) je ein L-förmiges Schutzprofil 22 und 23 vorgesehen, dessen erster Schenkel jeweils in der Ebene zwischen den Funkenhörnern 8 und dem Isolierstück 11 bzw.12 angeordnet ist und dessen zweiter Schenkel sich jeweils oberhalb des Isolierstückes 11 bzw.12 rechtwinklig nach außen erstreckt. Durch diese L-förmigen Schutzprofile sind die als Isolierstoffleisten ausgebildeten Isolierstücke 11,12 vor einem möglichen Abbrand geschützt, falls es bei entgleisten oder gebrochenen Pantographen zu einem dauernden Lichtbogen kommen sollte. Darüber hinaus bietet der zweite Schenkel des L-förmigen Schutzprofils 22 bzw.23 einen zusätzlichen UV-Schutz für die Isolierstücke 11 und 12.

Die stufenlose Anpassung der Leitkufen 15 und 16 an die vertikale Lage des Schleifstückes des Pantographen wird erfindungsgemäß durch eine Dämpfungseinrichtung erreicht, die im dargestellten Ausführungsbeispiel für jede Leitkufe 15 bzw.16 einen hydraulischen Stoßdämpfer 24 bzw.25 und einen Hubbegrenzer 26 bzw.27 umfaßt. Jeweils ein Stoßdämpfer 24 bzw.25 und ein Hubbegrenzer 26 bzw.27 sind in den zweiten Schenkeln der L-förmigen Schutzprofile 22 und 23 befestigt.

Durch die erfindungsgemäß vorgesehene Dämpfungseinrichtung (Stoßdämpfer 24 und 25) bewegen sich die Leitkufen 15 und 16 gedämpft nach oben in ihre Schließlage (Trennstelle elektrisch leitend überbrückt) sowie schnell und ohne nachzuschwingen nach unten in ihre Ruhelage (beide Fahrdrähte elektrisch voneinander getrennt). Die Schließlage der Leitkufen 15 und 16 ist jeweils durch einen Hubbegrenzer 26 bzw.27 begrenzt. Durch die gedämpfte und nachschwingungsfreie Bewegung der beiden Leitkufen 15 und 16 ist bei Doppeltraktion sichergestellt, daß der zweite Pantograph bereits wieder ruhende Leitkufen 15 und 16 befährt.

Bei dem erfindungsgemäßen Streckentrenner werden die Auflaufkufen 8a der beiden Funkenhörner 8 sowie die Leitkufen 15 und 16 vom Schleifstück des Pantographen befahren. Die Auflaufkufe 8a des Funkenhorns 8 sowie die Leitkufen 15 und 16 liegen hierzu in der Ebene des Fahrdrahtes, wobei die Leitkufen 15 und 16 über die Auflaufkufe 8a hinaus angehoben werden können. Im Bereich der Trennstelle werden dann ausschließlich die beiden Leitkufen 15 und 16 vom Schleifstück des Pantographen beschliffen. Die Leitkufen 15 und 16 passen sich hierbei auf die vorstehend beschriebene Weise stufenlos der vertikalen Lage des Pantographen sowie den Unebenheiten auf dem Schleifstück des Pantographen an. Die Beschleifung des Streckentrenners erfolgt synchron, da das Schleifstück des Pantographen immer elektrischen Kontakt zu wenigstens einer Leitkufe 15 bzw.16 und/oder zur Auflaufkufe 8a des jeweiligen Funkenhorns 8 hat. Damit wird die beim Befahren auftretende Funkenbildung sowie die damit verbundenen Verschleißerscheinungen im Bereich der Trennstelle weitestgehend vermieden.

In vorteilhafter Weise eignet sich der erfindungsgemäße Streckentrenner auch zur Nachrüstung. Bei einem Austausch mit dem bisherigen Streckentrenner ist lediglich der Bolzen 9 zu entfernen und der erfindungsgemäße Streckentrenner einzubolzen. Anschließend muß der erfindungsgemäße Streckentrenner dann nur noch einreguliert werden, um sofort betriebsbereit zu sein.

## Patentansprüche

1. Streckentrenner für Fahrleitungen elektrischer Fahrzeuge, insbesondere Bahnen, mit je einer Anschlußvorrichtung (3,10) für das jeweilige Fahrleitungsdrahtende (1,2) einerseits und dem jeweiligen Funkenhorn (8) eines Funkenhornpaares andererseits, wobei die Anschlußvorrichtungen (3,10) über vom Pantographen nicht beschliffene Isolierstücke (11,12) derart miteinander verbunden sind, daß sich die Funkenhörner (8) an einer Trennstelle isoliert gegenüberstehen, wobei an der Trennstelle wenigstens eine diese überbrückende Leitkufe (15,16) angeordnet ist, die mit einem der beiden Funkenhörner (8) elektrisch leitend verbunden ist, und wobei sich die Lage der Leitkufe (15,16) mittels einer Dämpfungseinrichtung (24,25) federnd und gedämpft an die Lage des Pantographen anpaßt.

2. Streckentrenner nach Anspruch 1, wobei zu beiden Seiten des Funkenhornpaares je ein Isolierstück (11,12) angeordnet ist.

3. Streckentrenner nach Anspruch 2, wobei zu beiden Seiten des Funkenhornpaares je ein L-förmiges Schutzprofil (22,23) vorgesehen ist, dessen erster Schenkel jeweils in der Ebene zwischen den Funkenhörnern (8) und dem Isolierstück (11,12) angeordnet ist und dessen zweiter Schenkel sich jeweils oberhalb des Isolierstückes (11,12) rechtwinklig nach außen erstreckt.

4. Streckentrenner nach einem der Ansprüche 1 bis 3, wobei die Leitkufe (15,16) an ihrem einen Ende mittels eines höhenverstellbaren Kufenabfangstückes (17,18), das an dem einen der beiden Fahrleitungsdrahtenden (1,2) angeordnet ist, vertikal drehbeweglich befestigt ist.

5. Streckentrenner nach Anspruch 4, wobei das andere Ende der Leitkufe (15,16) kufenartig nach oben gerichtet ist.

6. Streckentrenner nach einem der Ansprüche 1 bis 5, wobei mehrere Leitkufen (15,16) vorgesehen sind.

7. Streckentrenner nach Anspruch 6, wobei genau zwei Leitkufen (15,16) vorgesehen sind.

8. Streckentrenner nach einem der Ansprüche 1 bis 7, wobei die Dämpfungseinrichtung als hydraulisch wirkende Dämpfungseinrichtung (24,25) ausgebildet ist.

9. Streckentrenner nach einem der Ansprüche 1 bis 7, wobei die Dämpfungseinrichtung als pneumatisch wirkende Dämpfungseinrichtung ausgebildet ist.

10. Streckentrenner nach Anspruch 8, wobei die Dämpfungseinrichtung einen hydraulischen Stoßdämpfer (24,25) umfaßt.

11. Streckentrenner nach einem der Ansprüche 1 bis 10, wobei die Dämpfungseinrichtung einen Hubbegrenzer (26,27) umfaßt.

12. Streckentrenner nach einem der Ansprüche 3 bis 11, wobei die Dämpfungseinrichtung (24,25) im zweiten Schenkel des L-förmigen Schutzprofils (22,23) befestigt ist.

13. Streckentrenner nach Anspruch 11, wobei der Hubbegrenzer (26,27) im Zweiten Schenkel des L-förmigen Schutzproflls (22,23) befestigt ist.

14. Streckentrenner nach einem der Ansprüche 1 bis 13, wobei die Isolierstücke als Isolierstoffleisten (11,12) ausgebildet sind.

## Claims

1. Section isolator for contact lines of electric vehicles, in particular railways, having a respective connection device (3, 10) for the respective contact-line wire end (1, 2) on the one hand, and the respective arcing horn (8) of an arcing horn pair on the other hand, with the connection devices (3, 10) being connected to each other by way of insulating pieces (11, 12), which are not ground by the pantograph, in such a way that the arcing horns (8) oppose each other at an isolating point in a manner such that they are insulated, with there being arranged at the isolating point at least one conductive runner (15, 16) which bridges the said isolating point and is connected in an electrically conductive manner to one of the two arcing horns (8), and with the position of the conductive runner (15, 16) being adapted to the position of the pantograph in a resilient and dampened manner by means of a damping device (24, 25).

2. Section isolator according to claim 1, with a respective insulating piece (11, 12) being arranged on both sides of the arcing horn pair.

3. Section isolator according to claim 2, with there being provided on both sides of the arcing horn pair a respective L-shaped protective profile (22, 23), the first limb of which is arranged in each case in the plane between the arcing horns (8) and the insulating piece (11, 12), and the second limb of which extends in each case outwards at right angles over the insulating piece (11, 12).

4. Section isolator according to one of the claims 1 to 3, with the conductive runner (15, 16) being fastened at its one end, in a manner such that it is movable in a vertically rotational manner, by means of a vertically adjustable runner support piece (17, 18), which is arranged on one of the two contact-line wire ends (1, 2).

5. Section isolator according to claim 4, with the other end of the conductive runner (15, 16) being directed upwards in a runner-like manner.

6. Section isolator according to one of the claims 1 to 5, with a plurality of conductive runners (15, 16) being provided.

7. Section isolator according to claim 6, with precisely two conductive runners (15, 16) being provided.

8. Section isolator according to one of the claims 1 to 7, with the damping device being in the form of a hydraulically operative damping device (24, 25).

9. Section isolator according to one of the claims 1 to 7, with the damping device being in the form of a pneumatically operative damping device.

10. Section isolator according to claim 8, with the damping device comprising a hydraulic shock absorber (24, 25).

11. Section isolator according to one of the claims 1 to 10, with the damping device comprising a lift stop (26, 27).

12. Section isolator according to one of the claims 3 to 11, with the damping device (24, 25) being fastened in the second limb of the L-shaped protective profile (22, 23).

13. Section isolator according to claim 11, with the lift stop (26, 27) being fastened in the second limb of the L-shaped protective profile (22, 23).

14. Section isolator according to one of the claims 1 to 13, with the insulating pieces being in the form of insulating-material strips (11, 12).

## Revendications

1. Isolateur de section destiné à des caténaires de véhicules électriques, notamment de trains, comportant un dispositif de raccordement (3, 10) pour chaque extrémité (1, 2) du fil de contact d'une part, et chaque cornet électromagnétique (8) d'un couple de cornets électromagnétiques d'autre part, les dispositifs de raccordement (3, 10) étant reliés entre eux par l'intermédiaire d'éléments isolants (11, 12), sur lesquels le pantographe ne frotte pas, de telle sorte que les cornets électromagnétiques (8) soient en face l'un de rapport à l'autre en étant isolés au niveau d'un point de sectionnement, un patin conducteur (15, 16) au moins, qui ponte ce point de sectionnement et qui est relié de façon électriquement conductrice à l'un des deux cornets électromagnétiques (8) étant disposé au niveau du point de sectionnement, et la position du patin conducteur (15, 16) étant adaptée de façon élastique et amortie à la position du pantographe au moyen d'un dispositif d'amortissement (24, 25).

2. Isolateur de section suivant la revendication 1, selon lequel un élément isolant (11, 12) est disposé de chaque côté du couple de cornets électromagnétiques.

3. Isolateur de section suivant la revendication 2, selon lequel un profilé de protection (22, 23) en forme de L est prévu de chaque côté du couple de cornets électromagnétiques, dont la première branche est disposée dans le plan situé entre les cornets électromagnétiques (8) et l'élément isolant (11, 12), et dont la deuxième branche s'étend à angle droit vers l'extérieur au-dessus de l'élément isolant (11,12).

4. Isolateur de section suivant l'une quelconque des revendications 1 à 3, selon lequel le patin conducteur (15, 16) est fixé par l'une de ses extrémités de façon à pouvoir tourner verticalement, au moyen d'un élément de retenue (17, 18) de patin, qui est réglable en hauteur et qui est disposé sur l'une des deux extrémités (1, 2) du fil de contact.

5. Isolateur de section suivant la revendication 4, selon lequel l'autre extrémité du patin conducteur (15, 16) est orientée vers le haut en forme de patin.

6. Isolateur de section suivant l'une quelconque des revendications 1 à 5, selon lequel plusieurs patins conducteurs (15, 16) sont prévus.

7. Isolateur de section suivant la revendications 6, selon lequel exactement deux patins conducteurs (15, 16) sont prévus.

8. Isolateur de section suivant l'une quelconque des revendications 1 à 7, selon lequel le dispositif d'amortissement est réalisé sous la forme d'un dispositif d'amortissement (24, 25) à action hydraulique.

9. Isolateur de section suivant l'une quelconque des revendications 1 à 7, selon lequel le dispositif d'amortissement est réalisés sous la forme d'un dispositif d'amortissement à action pneumatique.

10. Isolateur de section suivant la revendication 8, selon lequel le dispositif d'amortissement comporte un amortisseur hydraulique (24, 25).

11. Isolateur de section suivant l'une quelconque des revendications 1 à 10, selon lequel le dispositif d'amortissement comporte un limiteur de course (26, 27).

12. Isolateur de section suivant l'une quelconque des revendications 3 à 11, selon lequel le dispositif d'amortissement (24, 25) est fixé dans la deuxième branche du profilé de protection (22, 23) en forme de L.

13. Isolateur de section suivant la revendication 11, selon lequel le limiteur de course (26, 27) est fixé dans la deuxième branche du profilé de protection (22, 23) en forme de L.

14. Isolateur de section suivant l'une quelconque des revendications 1 à 13, selon lequel les éléments isolants sont réalisés sous la forme de réglettes (11, 12) en matière isolante.
